# EUROPEAN PATENT SPECIFICATION

(11) **EP 2 853 413 B1**
(45) Date of publication and mention of the grant of the patent: **21.06.2017**
(21) Application number: 13425131.3
(22) Date of filing: 30.09.2013
(51) Int. Cl.: B60B 3/04, B60B 33/00, F16C 19/26

(54) **Wheel for items of furniture**
Rad für Möbelstücke
Roue pour articles d'ameublement

(43) Date of publication of application: 01.04.2015
(73) Proprietor: EMILSIDER MECCANICA S.p.A., 40057 Cadriano di Granarolo Emilia (Prov. Bologna) (IT)
(72) Inventor: Melara, Francescantonio, 40121 Bologna (IT)
(74) Representative: Modiano, Micaela Nadia

(56) References cited:
- EP-A1- 2 314 463
- WO-A1-2008/034741
- DE-A1- 10 318 308
- DE-C1- 19 540 056
- DE-U1-202009 012 495
- US-A1- 2010 107 361
- US-A1- 2013 111 664

## Description

The present invention relates to a wheel for items of furniture.

The wheels used to support items of furniture (chairs, armchairs, other items of furniture and the like) belong predominantly to two different structural types: single castors and twin castors.

Twin castors are constituted by a pair of wheels which are mounted rotatably on a common axle, differently from single castors in which the axle supports only one rolling element.

The axle is defined by a support that comprises a vertical portion that is designed to be coupled with the item of furniture (in such vertical portion, a well is provided which is open upward and rotatably supports a vertical pin for auto-orientation which is integral with the item of furniture).

The support further comprises a portion protruding from the vertical portion, defining the rotation axle, and designed to accommodate the rolling element.

In a particular embodiment of this type of wheel provided with a single rolling element, the rolling element is engaged on a hollow sleeve that is rotatably coupled to the portion protruding from the vertical portion.

From the aesthetic point of view, this type of wheel is particularly appreciated in that it reduces the visual impact of the support to the minimum, by taking best advantage of the plays of light and shadow.

The wheels of the conventional type, in particular those indicated for use on chairs, armchairs and the like, have brakes which are designed to keep the rolling element locked when no vertical load is applied on the wheel (i.e. on the chair, armchair or the like there is nobody sitting down and/or other load).

These brakes are accommodated in the support thanks to the fact that the shaft on which the rolling elements are pivoted, in traditional wheels, has a minimal transverse encumbrance and thus there is sufficient space available to accommodate further elements, which are designed to ensure the braking of the wheel with a single rolling element.

In wheels in which the rolling element is supported by a hollow sleeve, on the other hand, the space available is insufficient to install brakes of the conventional type.

For this reason wheels of this type do not have brakes and thus are not adapted to meet all the possible applicative requirements. DE 20 2009 012495 U1 discloses a wheel according to the preamble of claim 1. The principal aim of the present invention is to solve the above mentioned drawbacks, by providing a wheel for items of furniture which is provided with brakes, in which the rolling element is supported by a hollow sleeve.

Within this aim, an object of the invention is to provide a wheel for items of furniture which has a minimal visual impact and is suitable for any type of installation.

Another object of the invention is to provide a wheel for items of furniture which is provided with a single rolling element, particularly adapted for chairs, armchairs and the like, and making it possible to keep the wheels braked when there is no user seated and free to roll otherwise.

Another object of the present invention is to provide a wheel for items of furniture which is practical and safe in use.

In accordance with the invention, there is provided a wheel for items of furniture as defined in the appended claims.

Further characteristics and advantages of the invention will become better apparent from the description of a preferred, but not exclusive, embodiment of the wheel for items of furniture according to the invention, which is illustrated by way of non-limiting example in the accompanying drawings wherein:
Figure 1 is an exploded perspective view of a first embodiment of a wheel for items of furniture according to the invention;
Figure 2 is a view from above of the wheel in Figure 1;
Figure 3 is a sectional side view taken along the line III-III in Figure 2, of the wheel in Figure 1 in the braked configuration;

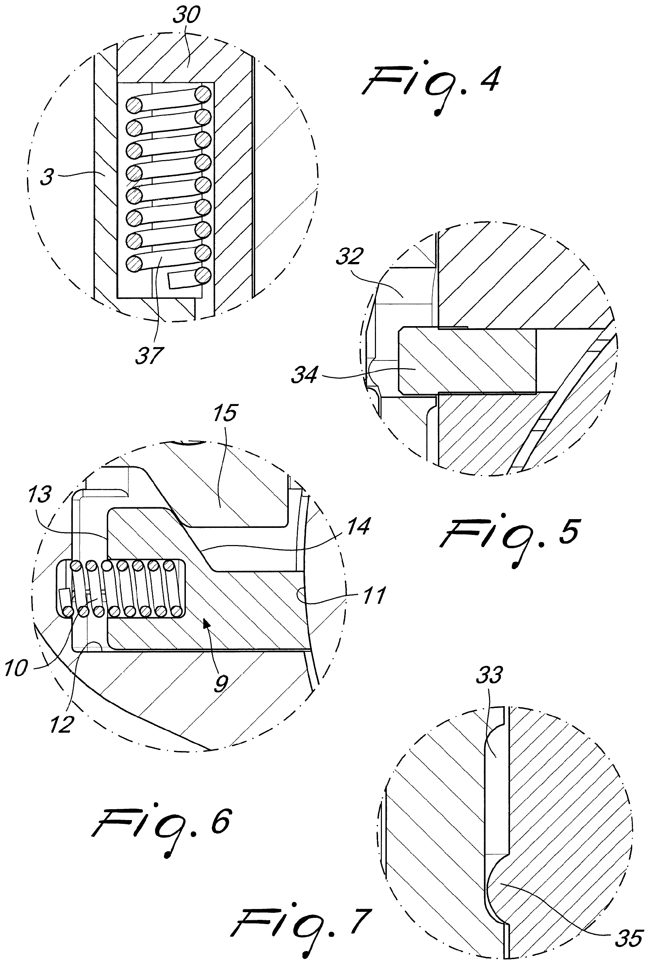

Figure 4 is an enlarged view of a detail of Figure 3;
Figure 5 is an enlarged view of a detail of Figure 3;
Figure 6 is an enlarged view of a detail of Figure 3;
Figure 7 is an enlarged view of a detail of Figure 3;

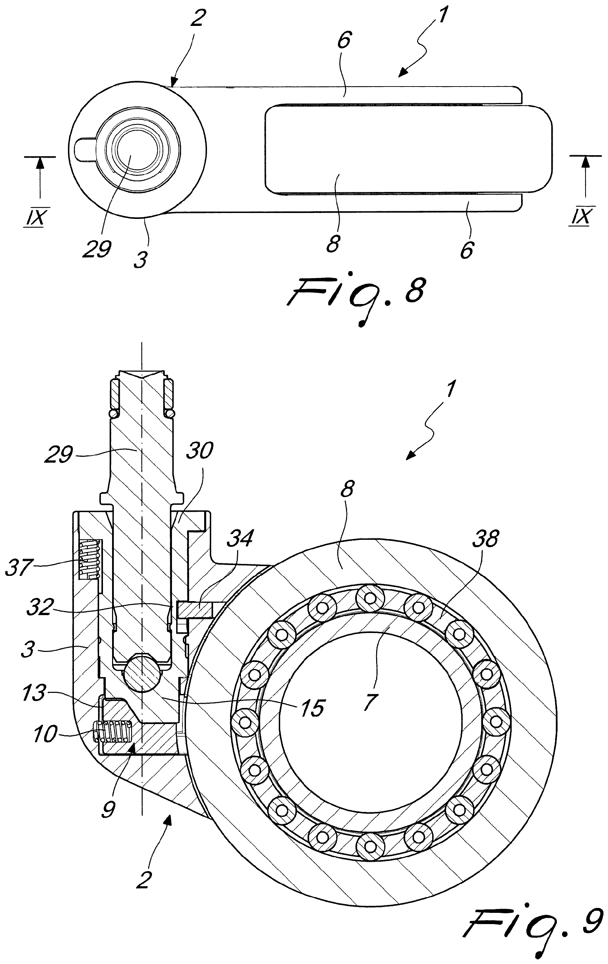

Figure 8 is a view from above of the wheel in Figure 1;
Figure 9 is a sectional side view taken along the line IX-IX in Figure 8 of the wheel in Figure 1 in the rolling configuration;

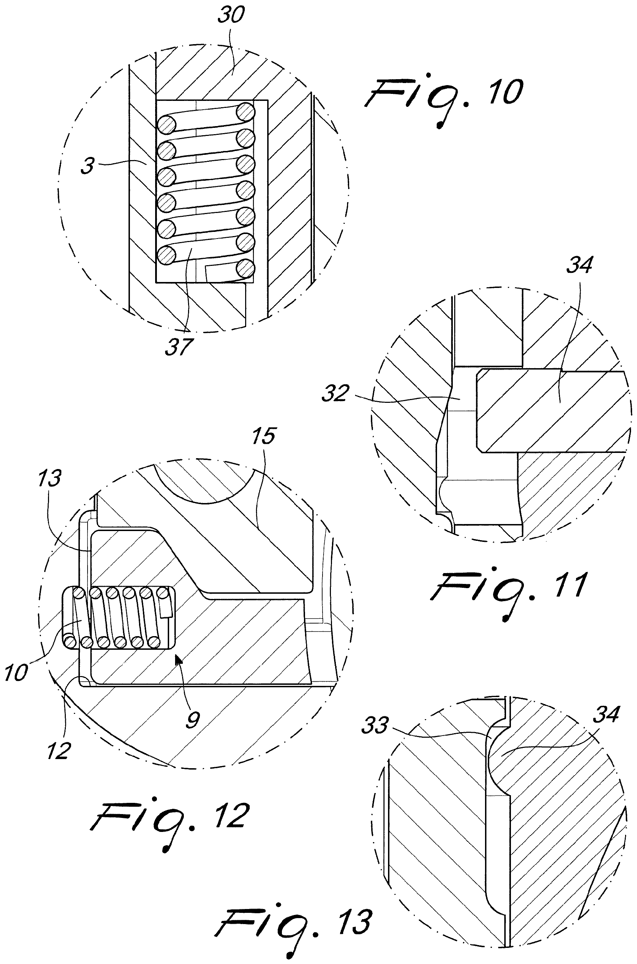

Figure 10 is an enlarged view of a detail of Figure 9;
Figure 11 is an enlarged view of a detail of Figure 9;
Figure 12 is an enlarged view of a detail of Figure 9;
Figure 13 is an enlarged view of a detail of Figure 9;
Figure 14 is an exploded perspective view of a second embodiment of a wheel for items of furniture according to the invention;
Figure 15 is a view from above of the wheel in Figure 14;
Figure 16 is a sectional side view taken along the line XVI-XVI in Figure 15 of the wheel in Figure 14 in the rolling configuration;
Figure 17 is a view from above of the wheel in Figure 14;
Figure 18 is a sectional side view taken along the line XVIII-XVIII in Figure 17 of the wheel in Figure 14 in the braked configuration;
Figure 19 is an enlarged view of a detail of Figure 18;
Figure 20 is an enlarged view of a detail of Figure 18;
Figure 21 is an enlarged view of a detail of Figure 18;
Figure 22 is an exploded perspective view of a third embodiment of a wheel for items of furniture according to the invention;
Figure 23 is a view from above of the wheel in Figure 22;
Figure 24 is a sectional side view taken along the line XXIV-XXIV in Figure 23 of the wheel in Figure 22 in the braked configuration;
Figure 25 is an enlarged view of a detail of Figure 24;
Figure 26 is an enlarged view of a detail of Figure 24;
Figure 27 is a view from above of the wheel in Figure 22;
Figure 28 is a sectional side view taken along the line XXVIII-XXVIII in Figure 27 of the wheel in Figure 22 in the rolling configuration;
Figure 29 is an enlarged view of a detail of Figure 28;
Figure 30 is an enlarged view of a detail of Figure 28;
Figure 31 is an exploded perspective view of a fourth embodiment of a wheel for items of furniture according to the invention;
Figure 32 is a view from above of the wheel in Figure 31;
Figure 33 is a sectional side view taken along the line XXXIII-XXXIII in Figure 32 of the wheel in Figure 31 in the braked configuration;
Figure 34 is a view from above of the wheel in Figure 31;
Figure 35 is a sectional side view taken along the line XXXV-XXXV in Figure 34 of the wheel in Figure 31 in the braked configuration.

With particular reference to the figures, a wheel for items of furniture is generally designated by the reference numeral 1.

The wheel 1 comprises a support 2, provided with at least one vertical portion 3 having at least one receptacle 4 for accommodating a supporting upright 5 that is integral with the item of furniture (the upright 5 can preferably be constituted by an assembly of separate components as shown for the purposes of non-limiting example in the description of some preferred embodiments which are described hereinafter).

The wheel 1 further comprises at least one lateral band 6, and a hollow sleeve 7, coupled to the at least one lateral band 6, which rotatably supports a substantially annular rolling element 8.

The rolling element 8 rotates (following a sliding of its inner surface on the outer surface of the sleeve 7) thus achieving the main movement of the wheel 1.

The wheel 1 according to the invention further comprises at least one slider 9, which is at least partially accommodated within the receptacle 4.

In the configuration for use of the wheel 1, the slider 9 is aligned with the end tip of the supporting upright 5.

The slider 9 is movable from a first configuration of interference with the rolling element 8 by way of the action of respective elastic means 10, with consequent resting of an abutment 11 thereof on the outer surface of the rolling element 8, to a second configuration of non-interference, by forcing of the elastic means 10, with consequent distancing of the abutment 11 from the outer surface of the rolling element 8.

It should be noted that the first configuration of interference corresponds to a deployment wherein the supporting upright 5 is raised and proximate to the slider 9, while the second configuration of interference corresponds to a lowered deployment of the supporting upright 5 resting on the slider 9 (such lowered deployment is attributable to the placing of a load on the item of furniture on which the wheel 1 is mounted).

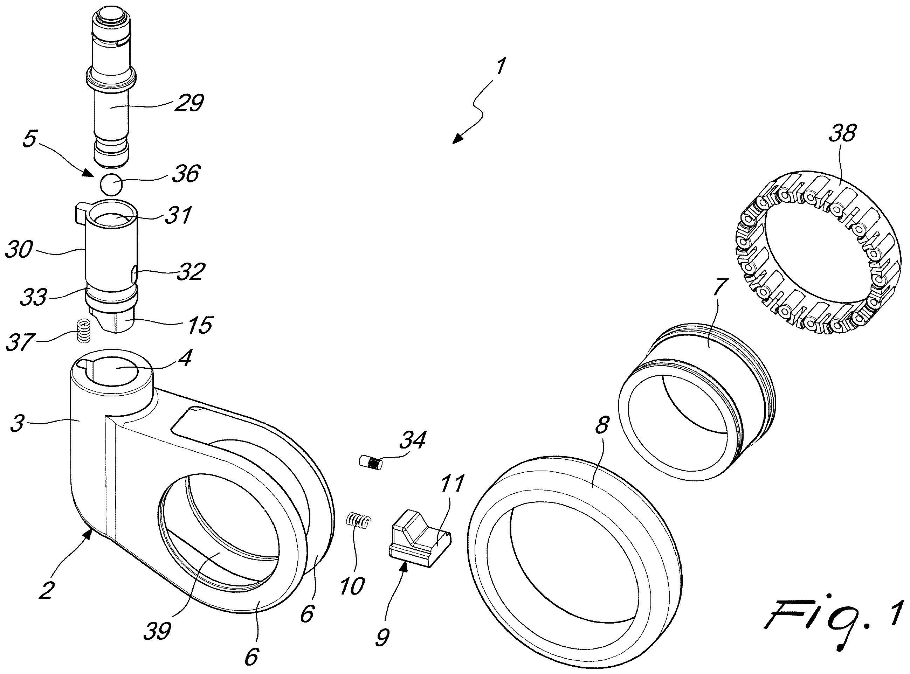

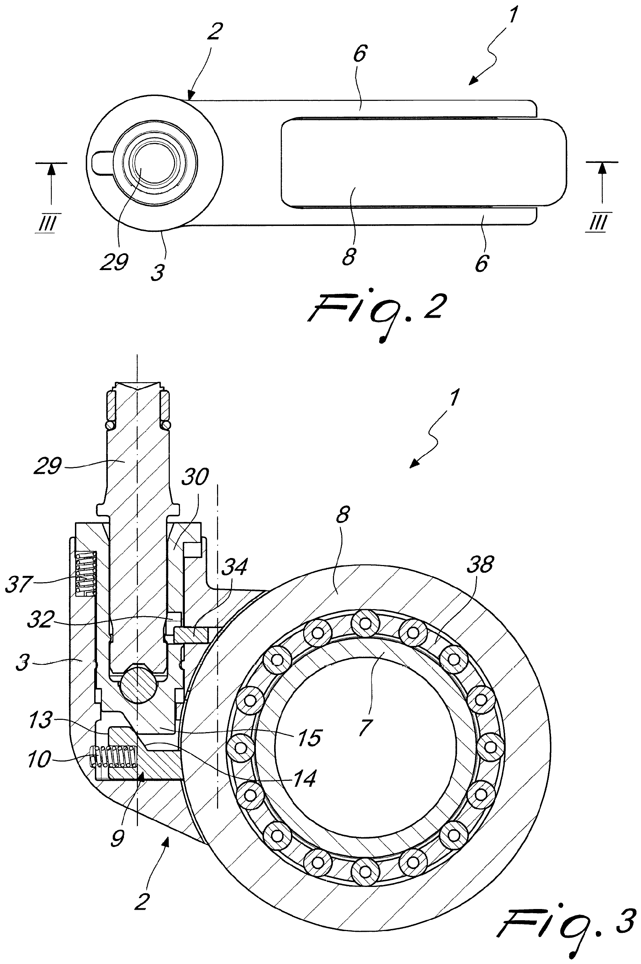

With particular reference to a specific embodiment that is easy to implement and is shown by way of example in Figures 1, 2 and 3, the slider 9 is slideable on the bottom 12 of the receptacle 4, in a transverse direction with respect to the axis of the supporting upright 5.

It should be noted that, in such case, between a second face 13 thereof, which is opposite a first face comprising the abutment 11, and the receptacle 4, the elastic means 10 are interposed for the forcing of the slider 9 into the configuration for interference.

A third upper face 14 of the slider 9 comprises an inclined plane that faces and is proximate to the end tip 15 of the supporting upright 5.

The descent of the supporting upright 5 (by acting on the inclined plane of the face 14) contrasts the elastic means 10 (in that it causes a retraction of the slider 9) with consequent distancing of the abutment 11 from the outer surface of the rolling element 8, defining the configuration of non-interference.

When no load is present on the item of furniture that surmounts the wheel 1, the upright 5 will be in the raised position and its lower end will not interfere with the upper face 14 of the slider 9 (or in any case it will not allow the slider 9 to advance until the abutment 11 comes into contact with the outer surface of the element 8).

For this reason the slider 9 will be pushed outwardly by the elastic means 10 (and kept in that position) so that its first face 11 rests on the rolling element 8, thus keeping it braked.

When, on the other hand, there is a load on the item of furniture that surmounts the wheel 1, then the upright 5 will be in the lowered position (pushed by the load) and its lower end will act on the upper face 14 of the slider 9, making it retreat and thus distancing the first face 11 thereof from the rolling element 8.

In such condition the rolling element 8 will be free to rotate.

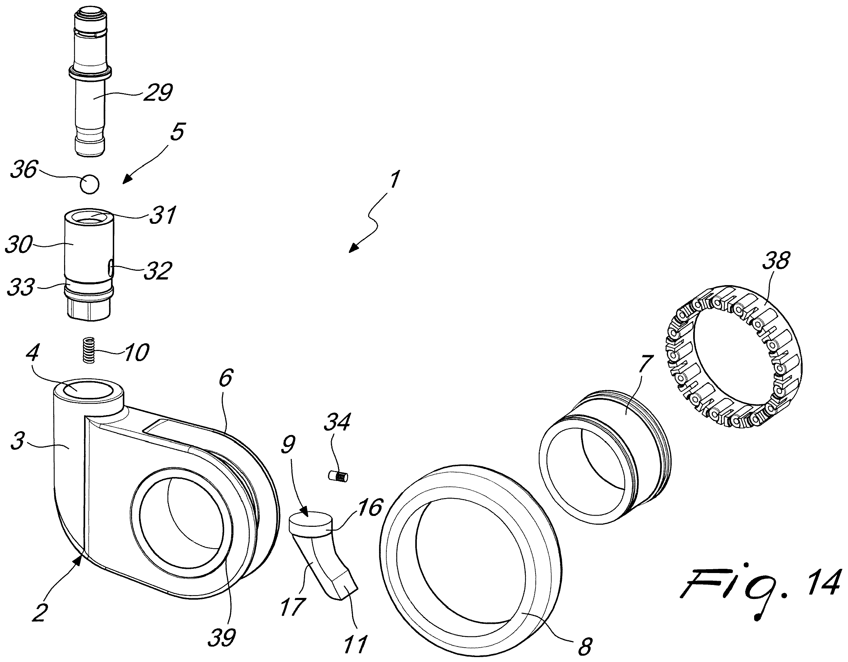

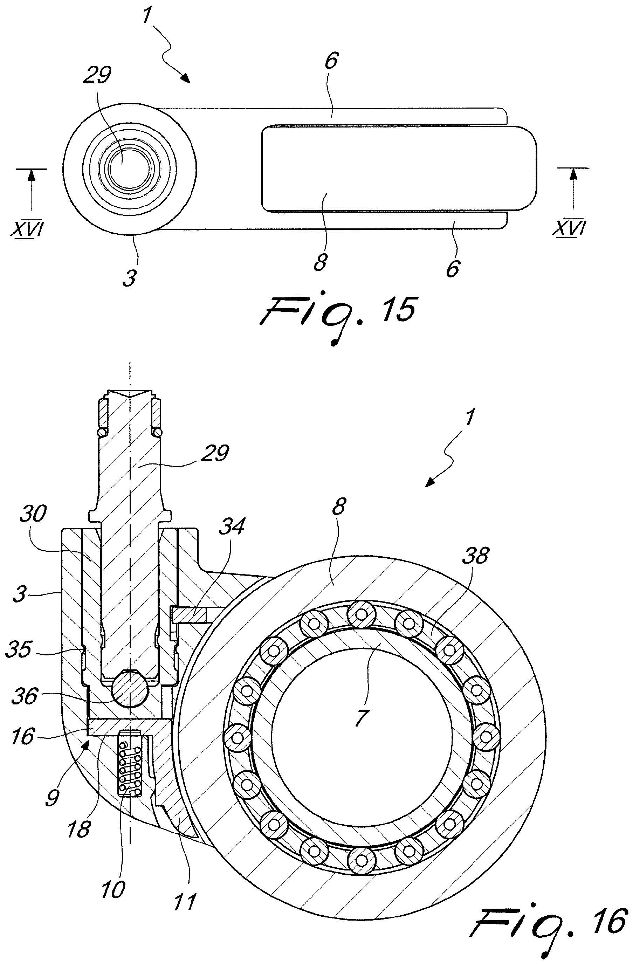

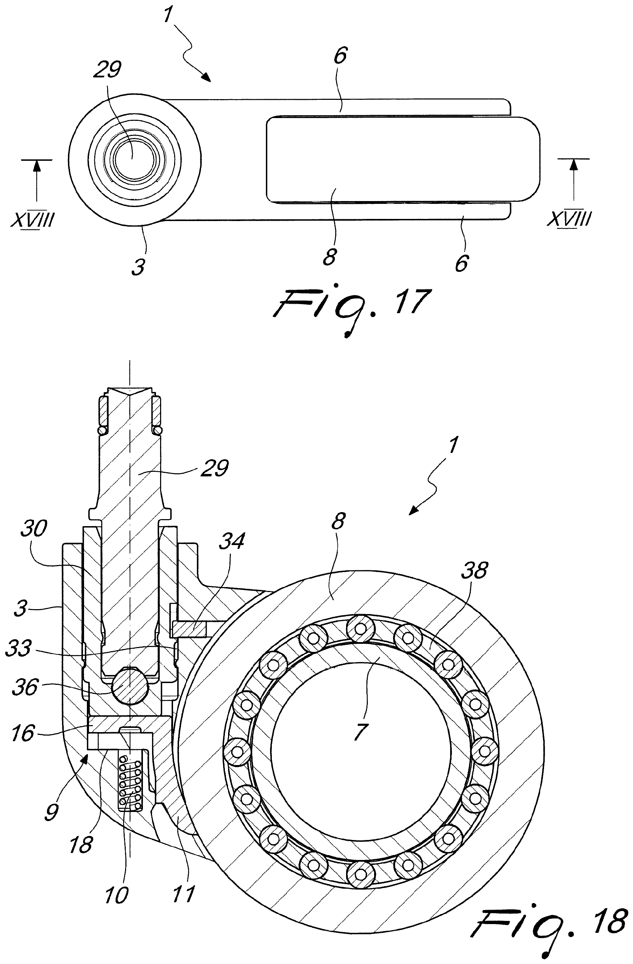

According to a possible further embodiment, alternative to the previous one and of undoubted practical interest, which is shown by way of example in Figures 14 to 17, the slider 9 can perform a translational movement vertically within the receptacle 4.

Such specific slider 9 comprises a main body 16 accommodated within the receptacle 4 and a protruding curved appendage 17 comprising the abutment 11 at one of its ends.

Between the lower end face 18 of the slider 9 and the bottom of the receptacle 4 are interposed the elastic means 10 for the forcing of the slider 9 into the configuration for interference between its curved appendage 17 and the outer surface of the rolling element 9.

The purpose of the elastic means 10 (in the absence of an external load on the item of furniture fitted with the wheel 1 according to the invention) is to keep the slider 9 raised with respect to the bottom of the receptacle 4 so that the curved appendage 17 presses on the outer surface of the rolling element 8, braking it.

Thus it should be noted that the descent of the supporting upright 5 will contrast the elastic means 10 with consequent distancing of the protruding appendage 17 from the outer surface of the rolling element 8, bringing the slider 9 into the configuration of non-interference.

Differently from the embodiment described previously, in this case the elastic means will act in the same direction along which the upright 5 can perform a translational motion, in substantial opposition thereto.

When the item of furniture on which the wheel 1 according to the invention is installed is not subjected to a load, the elastic means 10 will keep the slider 9 raised with respect to the bottom of the receptacle 4 and thus the appendage 17 (in particular the abutment 11 thereof) will be forced onto the outer surface of the rolling element 8, braking it.

But when there is a load present on the item of furniture with which the wheel 1 is associated, the upright 5 will be lowered thus forcing the slider 9 toward the bottom of the receptacle 4 with compression of the elastic means 10: this will result in a distancing of the appendage 17 from the rolling element 8, which will be free to rotate.

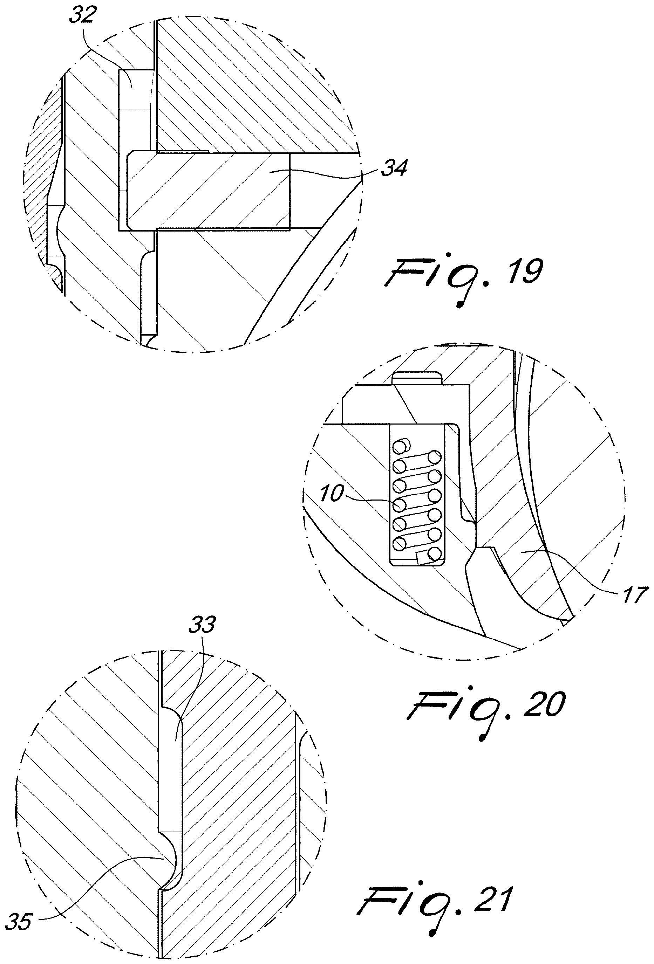

As can be seen in Figure 20, on the surface along which the appendage 17 slides can have projections in order to favor the forcing of the appendage 17 on the wheel 8.

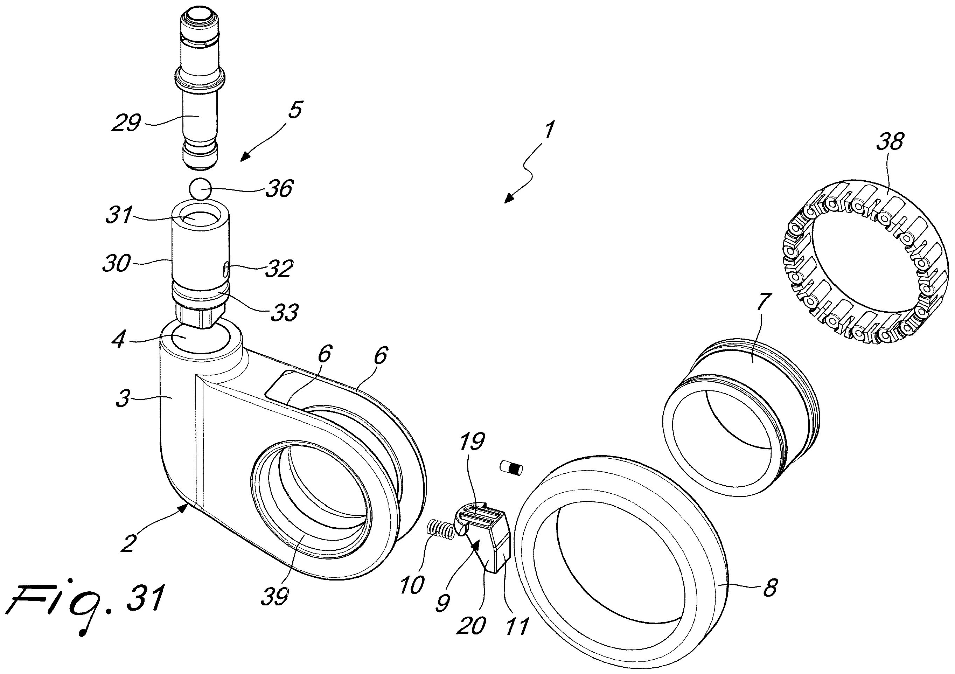

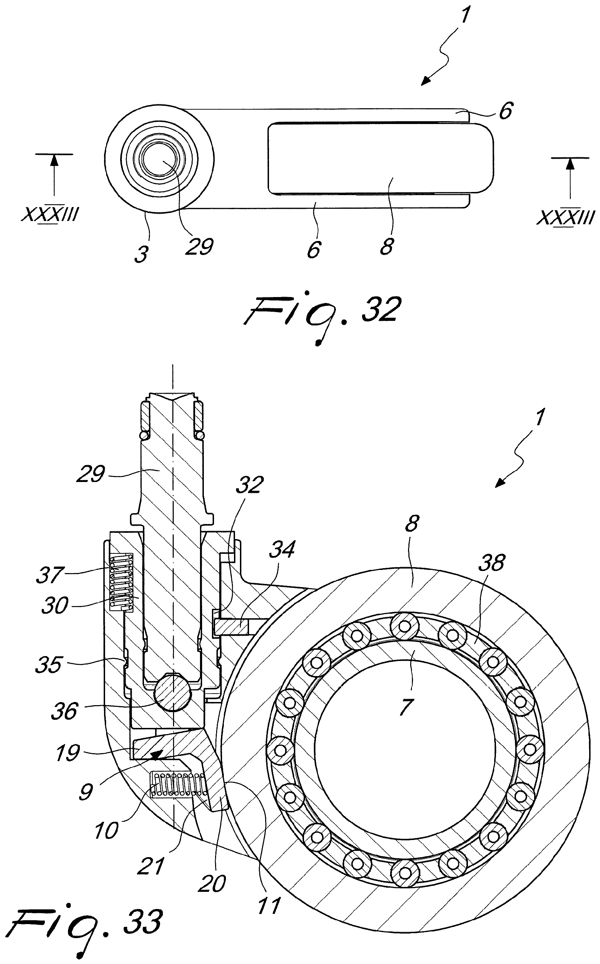

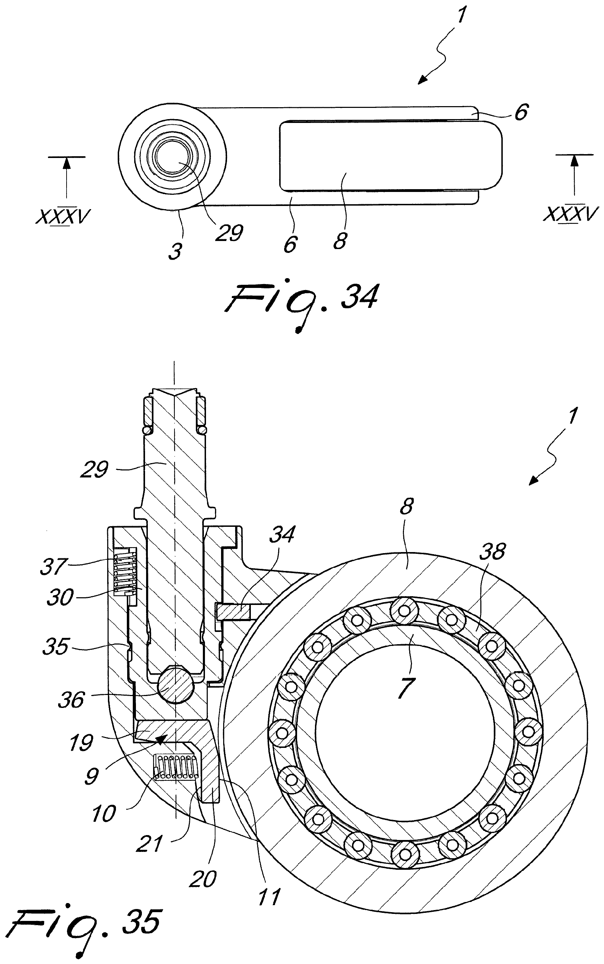

With reference to another embodiment, alternative to the previous embodiments and safe in use, shown by way of example in Figures 31 to 37, it should be noted that the slider 9 can be tilted within the receptacle 4.

In such case the slider 9 will comprise a main body 19 accommodated within the receptacle 4 and a contoured protruding protrusion 20 comprising the abutment 11.

Between a second face, opposite the abutment 11, of the protrusion 20 and the receptacle 4 are interposed the elastic means 10 which are intended to force a rotation of the slider 9 into the configuration for interference between the contoured protrusion 20 (in particular the abutment 11 thereof) and the outer surface of the rolling element 8.

The descent of the supporting upright 5 (after the placing of a load on the item of furniture associated therewith) will contrast the elastic means 10 with consequent distancing of the protrusion 20 from the outer surface of the rolling element 8 into the configuration of non-interference.

In this case also, when no load is placed on the item of furniture, the upright 5 will be raised and the protrusion 20 (in particular the abutment 11 thereof) will be resting on the outer surface of the rolling element 8, braking it (this is thanks to the rotation imposed by the elastic means 10 on the slider 9).

But when there is a load present on the item of furniture, the upright 5 will be in the lowered configuration and will impose a counter-rotation of the slider 9 in contrast with the elastic means 10 which will distance the protrusion 20 from the rolling element 8, thus enabling its free rotation.

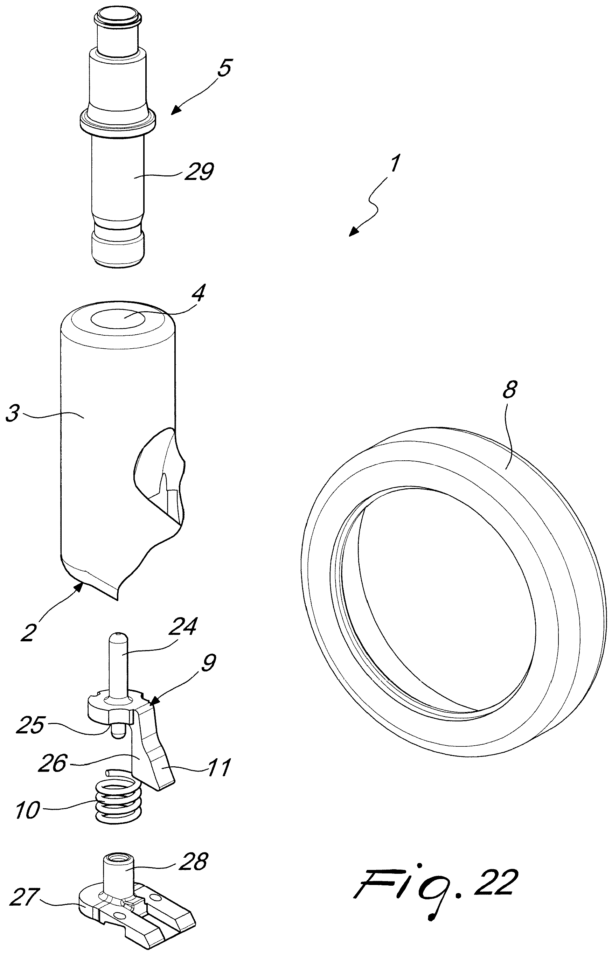

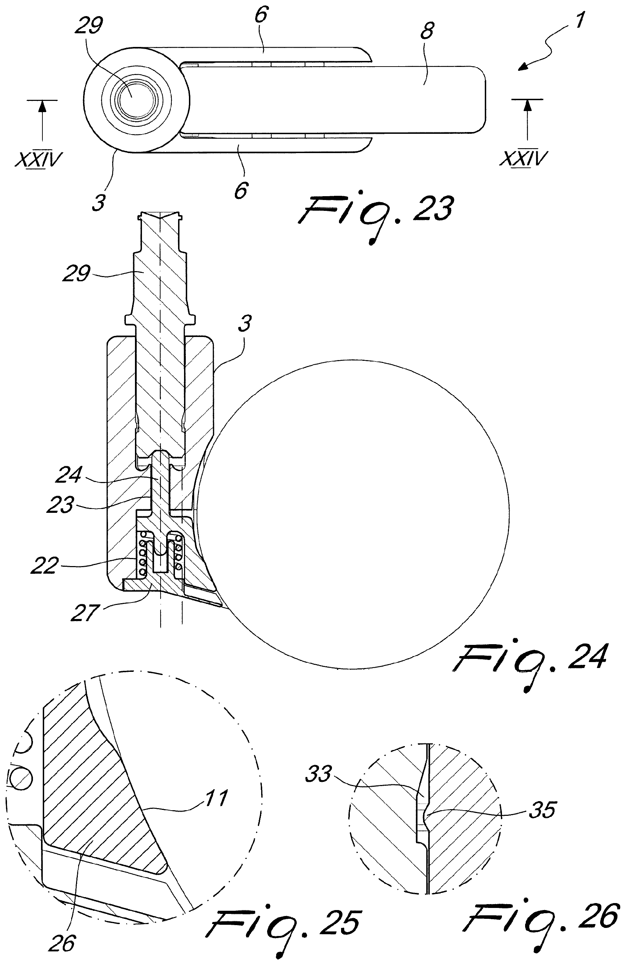

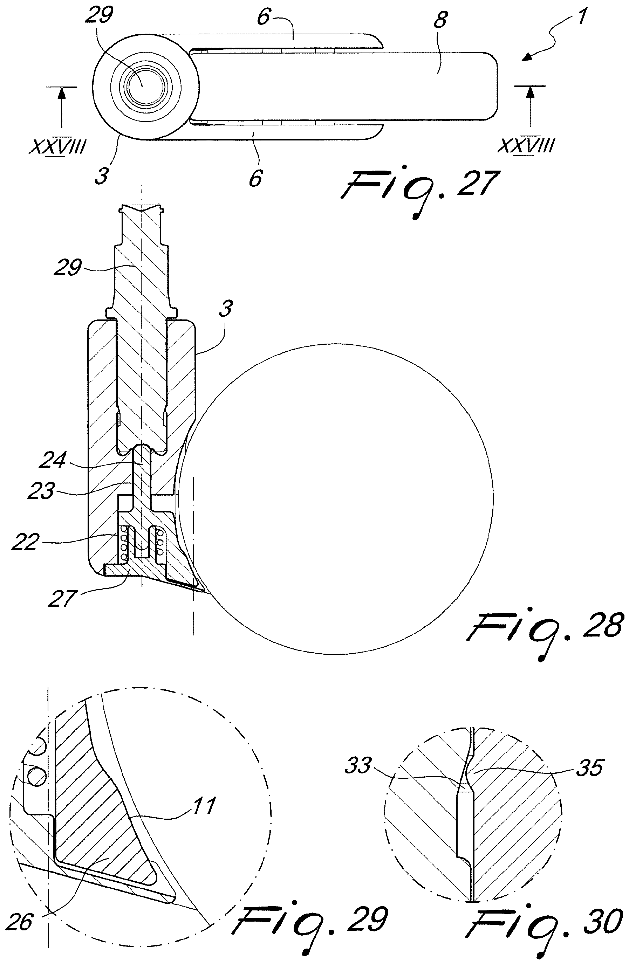

The final embodiment that will be described by way of non-limiting example of a wheel 1 according to the invention, alternative to the previous embodiments, shown by way of example in Figures 22 to 29, has a support 2 that comprises a lower compartment 22, aligned with the receptacle 4, for accommodating the slider 9.

It should be noted that, in such case, a channel 23 is defined between the compartment 22 and the receptacle 4.

The slider 9, with particular reference to this particular embodiment, comprises an upper stem 24 of complementary shape and dimensions to those of the channel 23: the stem 24 is in fact designed to slide inside the channel 23 during the use of the wheel 1.

Between the base 25 of the slider 9 and the bottom of the compartment 22 are interposed the elastic means 10 in order to keep the slider 9 in the raised position with corresponding interference of an appendage 26 thereof, comprising the abutment 11, on the outer surface of the rolling element 8.

The presence of a load on the item of furniture with which the wheel 1 is associated determines the descent of the supporting upright 5 with consequent resting of its end tip on the header of the stem 24 and the forcing downwardly thereof, and thus of the slider 9. This will determine a distancing of the slider 9 from the rolling element 8 and the assumption of the configuration of non-interference.

It should be noted that the bottom of the compartment 22 is constituted by a plug 27 which can be removably coupled to the support 2 for the closure of the compartment 22 after insertion of the slider 9 and of the elastic means 10 therein, in the assembly step.

In particular it should be noted that the plug 27 comprises an upper bushing 28 that can accommodate, externally, the elastic means 10 and, internally, a projection of the base 25 of the slider 9, thus ensuring an optimal alignment of all the components.

With regard to specific embodiments which make it possible to improve the functionality of all the implementation solutions described previously (and of others that are covered by the scope of the inventive concept of the present invention) it should be noted that the supporting upright 5 can comprise a pin 29, which is integral with the item of furniture, and a shaft element 30 of complementary outer shape and dimensions to those of the receptacle 4 and of complementary shape and dimensions of its inner cavity 31 to those of the pin 29.

It should be noted that the shaft element 30 is a component that is part of the upright 5, intended to be accommodated within a substantially vertical compartment of the body of the wheel 1 in order to accommodate (in its longitudinal cavity) the pin 29 that is integral with the item of furniture.

The shaft element 30 is thus slideable (along the direction of its axis of symmetry) within the receptacle 4 along a preset stroke, integrally with the pin 29 (the pin 29 and the shaft element 30 can furthermore rotate with respect to each other).

It should be noted that, preferably, the shaft element 30 comprises a slot 32, 33, which is substantially parallel to the axis of the shaft element 30 itself.

The slot 32 and 33 have a length equal to the preset stroke mentioned previously.

The receptacle in turn comprises a projection 34, 35, which is intended to be accommodated within the respective slot 32, 33.

This allows the abutment on the terminal edges of the slot 32, 33 of the projection 34, 35, at the two limit configurations defined by the preset stroke.

It should be noted that the projection 34, 35 can be preferably selected from among the end tip of a pin, the end tip of a grub screw 34, the end tip of a tab, the end tip of a key, the end tip of a screw, a localized protuberance of the inner surface of the receptacle 4, and a ridge 35 of the inner surface of the receptacle 4.

It should further be noted that between the pin 29 and the shaft element 30 a ball 36 is interposed.

The pin 29 thus has its end tip resting on a portion of reduced area of the ball 36, which in turn is resting on the bottom of the inner cavity 31 of the shaft element 30, with consequent minimization of friction and substantially free rotation of the shaft element 30 about the pin 29.

It should further be pointed out that between the receptacle 4 and the shaft element 30 can be interposed further elastic means 37 in order to keep the shaft element 30 in a raised position with respect to the receptacle 4, in the absence of a load on the item of furniture in which it is installed.

It should be noted that between the hollow sleeve 7, coupled to the at least one lateral band 6, and the substantially annular rolling element 8, is interposed at least one bearing 38, preferably of the type with balls, rollers, cylindrical-rollers and the like, while the possibility is not ruled out of using plain bearings, brasses and/or bushings made of self-lubricating material.

In this manner the rotation of the rolling element 8 is easier and is subject to reduced friction.

In order to optimize the braking action, the possibility exists of providing the abutment 11 of the slider 9 in a material with a high friction coefficient: owing to the braking action of the abutment 11, which must be executed following contact with the outer surface of the rolling element 8, it should be noted that the choice of material that constitutes the abutment 11, even if a high friction coefficient is desired, must take account of the type of interaction that will be generated between the two surfaces that will come into mutual contact (in order to maximize the friction coefficient of the coupling of the abutment 11 and the outer surface of the rolling element 8).

The lateral bands 6 can preferably be two in number, mutually facing and mutually proximate, and provided with substantially circular seats 39 for the accommodation of the sleeve 7.

The rolling element 8, which is substantially annular, preferably has an outer diameter greater than the transverse width of such bands 6, in the configuration for assembly. Its inner diameter on the other hand is slightly larger than the outer diameter of the sleeve 7.

In the configuration for assembly the rolling element 8 thus partially protrudes in a radial direction with respect to the bands 6.

Advantageously the present invention solves the above mentioned problems, by providing a wheel 1 for items of furniture which is provided with brakes, in which the single rolling element 8 is supported by a hollow sleeve 7.

Effectively the wheel 1 has a minimal visual impact and is adapted to any type of installation.

Conveniently the wheel 1 is provided with a single rolling element 8, being particularly adapted to application to the base of chairs, armchairs and the like, making it possible to keep them braked when there is no user seated on them and free to rotate otherwise.

The invention, thus conceived, is susceptible of numerous modifications and variations, all of which are within the scope of the appended claims.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A wheel (1) for items of furniture which comprises a support (2), said support (2) being provided with at least one vertical portion (3) having at least one receptacle (4) for accommodating a supporting upright (5) integral with the item of furniture, and said support (2) further having at least one lateral band (6), and the wheel (1) further comprising a hollow sleeve (7), said hollow sleeve (7) being coupled to the at least one said lateral band (6) and said hollow sleeve (7) rotatably supports a substantially annular rolling element (8), the wheel (1) further comprising at least one slider (9), which is at least partially accommodated in said receptacle (4), and is aligned with the end tip of said supporting upright (5), said at least one slider (9) being able to move from a first configuration of interference with said rolling element (8) by the action of respective elastic means (10), with consequent resting of an abutment (11) thereof on the outer surface of said rolling element (8), said first configuration corresponding to a deployment wherein said supporting upright (5) is raised and proximate to said slider (9), to a second configuration of non-interference, by forcing of said elastic means (10), with consequent distancing of said abutment (11) from the outer surface of said rolling element (8), said second configuration corresponding to a lowered deployment of said supporting upright (5) resting on said slider (9), said supporting upright (5) comprising a pin (29), which is integral with said item of furniture, and a shaft element (30) of complementary outer shape and dimensions to those of said receptacle (4) and of complementary shape and dimensions of its inner cavity (31) to those of said pin (29), said shaft element (30) being slideable into said receptacle (4) along a preset stroke, integrally with said pin (29), **characterized by** said shaft element (30) comprising a slot (32, 33), substantially parallel to the axis of said shaft element (30), of equal length to the said preset stroke, said receptacle (4) comprising a projection (34, 35), designed to be accommodated within said slot (32, 33), for the abutment on the terminal edges thereof at the two limit configurations that are defined by said preset stroke.

2. The wheel according to claim 1, **characterized in that** said slider (9) is slideable on the bottom (12) of said receptacle (4) in a transverse direction with respect to the axis of said supporting upright (5), between a second face (13) thereof, opposite a first face comprising the said abutment (11), and said receptacle (4) there being interposed the said elastic means (10) for the forcing of said slider (9) into the configuration for interference, a third face (14) above said slider (9) comprising an inclined plane that faces and is proximate to the end tip (15) of said supporting upright (5), the descent of said supporting upright (5) contrasting said elastic means (10) with consequent distancing of said abutment (11) from the outer surface of said rolling element (8) in the said configuration of non-interference.

3. The wheel according to claim 1 and in alternative to claim 2, **characterized in that** said slider (9) can perform a translational movement vertically within said receptacle (4) and comprises a main body (16) accommodated within said receptacle (4) and a protruding curved appendage (17) comprising the said abutment (11), between the lower end face (18) thereof and said receptacle (4) there being interposed the said elastic means (10) for the forcing of said slider (9) in the configuration for interference between said curved appendage (17) and the outer surface of said rolling element (8), the descent of said supporting upright (5) contrasting said elastic means (10) with consequent distancing of said protruding appendage (17) from the outer surface of said rolling element (8) in the said configuration of non-interference.

4. The wheel according to claim 1 and in alternative to claims 2 and 3, **characterized in that** said slider (9) can tilt within said receptacle (4) and comprises a main body (19) accommodated within said receptacle (4) and a contoured protruding protrusion (20) comprising said abutment (11), between a second face (21), opposite to the abutment (11), of said protrusion (20) and said receptacle (4) there being interposed the said elastic means (10) for the forcing of a rotation of said slider (9) in a configuration for interference between said contoured protrusion (20) and the outer surface of said rolling element (8), the descent of said supporting upright (5) contrasting said elastic means (10) with consequent distancing of said protrusion (20) from the outer surface of said rolling element (8) in the said configuration of non-interference.

5. The wheel according to claim 1 and in alternative to claims 2, 3 and 4, **characterized in that** said support (2) comprises a lower compartment (22), aligned with the said receptacle (4), for the accommodation of said slider (9), between said compartment (22) and said receptacle (4) a channel (23) being defined, said slider (9) comprising an upper stem (24) of complementary shape and dimensions to those of said channel (23) for slideable insertion therein, between the base (25) of said slider (9) and the bottom of said compartment (22) there being interposed elastic means (10) in order to keep said slider (9) in a raised position with corresponding interference of an appendage (26) thereof, comprising said abutment (11), on the outer surface of the said rolling element (8), the descent of said supporting upright (5), following the presence of a load on the item of furniture, causing its end to be rested on the header of said stem (24) and causing the latter, and thus the slider (9), to be forced downwardly, with consequent distancing of the slider (9) from the said rolling element (8) and assumption of the said configuration of non-interference.

6. The wheel according to claim 5, **characterized in that** the bottom of said compartment (22) is constituted by a plug (27) which can be removably coupled to the said support (2) for the closure of said compartment (22) after the insertion of said slider (9) and of said elastic means (10), in the assembly step.

7. The wheel according to claim 1, **characterized in that** said projection (34, 35) is preferably selected from among the end tip of a pin, the end tip of a grub screw (34), the end tip of a tab, the end tip of a key, the end tip of a screw, a localized protuberance of the inner surface of said receptacle, and a ridge (35) of the inner surface of said receptacle (4).

8. The wheel according to claim 1, **characterized in that** between said pin (29) and said shaft element (30) is interposed a ball (36), said pin (29) having its end tip resting on a portion of reduced area of said ball (36) which in turn is resting on the bottom of said inner cavity (31) of said shaft element (30), with consequent minimization of friction and substantially free rotation of said shaft element (30) about said pin (29).

9. The wheel according to one or more of the preceding claims, **characterized in that** between said receptacle (4) and said shaft element (30) are interposed further elastic means (37) in order to keep said shaft element (30) in a raised position with respect to said receptacle (4) in the absence of a load on the item of furniture in which it is installed.

10. The wheel according to one or more of the preceding claims, **characterized in that** between said hollow sleeve (7), coupled to the at least one said lateral band (6), and said substantially annular rolling element (8) is interposed at least one bearing (38), preferably of the type with balls, rollers, cylindrical-rollers and the like.

11. The wheel according to one or more of the preceding claims, **characterized in that** said abutment (11) of said slider (9) is made of a material with a high friction coefficient with the outer surface of said rolling element (8).

12. The wheel according to one or more of the preceding claims, **characterized in that** said lateral bands (6) are two in number, mutually facing and mutually proximate, provided with substantially circular seats (39) for the accommodation of said sleeve (7), said substantially annular rolling element (8) having an outer diameter greater than the transverse width of said bands (6), in the configuration for assembly, said rolling element (8) protruding partially in a radial direction with respect to said bands (6).

## Patentansprüche

1. Ein Rad (1) für Möbelstücke, das einen Träger (2) umfasst, wobei der Träger (2) mit mindestens einem vertikalen Abschnitt (3) versehen ist, der mindestens eine Vertiefung (4) zur Aufnahme eines stützenden Ständers (5), integral mit dem Möbelstück, hat, und wobei der Träger (2) weiter mindestens ein seitliches Band (6) hat und das Rad (1) weiter eine hohle Hülse (7) umfasst, wobei die hohle Hülse (7) mit dem mindestens ein seitliches Band (6) gekoppelt ist und die hohle Hülse (7) drehbar ein im Wesentlichen ringförmiges Rollenelement (8) trägt, wobei das Rad (1) weiter mindestens einen Schieber (9) umfasst, der zumindest teilweise in der Vertiefung (4) untergebracht und mit der Endspitze des stützenden Ständers (5) ausgerichtet ist, wobei der mindestens eine Schieber (9) in der Lage ist, sich aus einer ersten Konfiguration des Eingriffs mit dem Rollenelement (8) durch die Wirkung entsprechender elastischer Mittel (10), mit daraus folgendem Aufliegen eines Widerlagers (11) davon auf der Außenfläche des Rollenelements (8), wobei die erste Konfiguration einem Einsatz entspricht, wobei der stützende Ständer (5) angehoben ist und an den Schieber (9) angrenzt, in eine zweite Konfiguration des Nicht-Eingriffs zu bewegen, durch Drücken der elastischen Mittel (10) mit daraus folgendem Beabstanden des Widerlagers (11) von der Außenfläche des Rollenelements (8), wobei die zweite Konfiguration einem abgesenkten Einsatz des stützenden Ständers (5) entspricht, der auf dem Schieber (9) aufsitzt, wobei der stützende Ständer (5) einen Bolzen (29) umfasst, der integral mit dem Möbelstück ist, und ein Schaftelement (30) mit einer äußeren Form und Maßen, die komplementär zu denjenigen der Vertiefung (4) sind, und mit einer Form und Maßen seines inneren Hohlraums (31), die komplementär zu denjenigen des Bolzens (29) sind, wobei das Schaftelement (30), integral mit dem Bolzen (29), entlang einem vordefinierten Hub in die Vertiefung (4) verschiebbar ist, **dadurch gekennzeichnet,**
**dass** das Schaftelement (30) einen Schlitz (32, 33), im Wesentlichen parallel zur Achse des Schaftelements (30), von gleicher Länge wie der vordefinierte Hub, umfasst, wobei die Vertiefung (4) einen Vorsprung (34, 35) umfasst, konstruiert, um in den Schlitz (32, 33) aufgenommen zu werden, zum Anstoßen, mit den Endkanten desselben, an den zwei Endkonfigurationen, die durch den vordefinierten Hub bestimmt sind.

2. Das Rad gemäß Anspruch 1, **dadurch gekennzeichnet, dass** der Schieber (9) auf dem Boden (12) der Vertiefung (4) in eine Querrichtung mit Bezug auf die Achse des stützenden Ständers (5) verschiebbar ist, wobei zwischen einer zweiten Fläche (13) desselben, gegenüber einer ersten Fläche, die das Widerlager (11) umfasst, und der Vertiefung (4) die elastischen Mittel (10) zum Drücken des Schiebers (9) in die Eingriffskonfiguration angeordnet sind, wobei eine dritte Fläche (14) oberhalb des Schiebers (9) eine schräge Ebene umfasst, die der Endspitze (15) des stützenden Ständers (5) zugewandt ist und an ihn angrenzt, wobei das Absenken des stützenden Ständers (5) den elastischen Mitteln (10) entgegenwirkt, mit daraus folgendem Beabstanden des Widerlagers (11) von der Außenfläche des Rollenelements (8) in die Nicht-Eingriffs-Konfiguration.

3. Das Rad gemäß Anspruch 1 und alternativ gemäß Anspruch 2, **dadurch gekennzeichnet, dass** der Schieber (9) vertikal innerhalb der Vertiefung (4) eine Translationsbewegung durchführen kann und einen Hauptkörper (16) umfasst, aufgenommen in die Vertiefung (4), und einen vorstehenden gekrümmten Anhang (17), der das Widerlager (11) umfasst, wobei zwischen der unteren Endfläche (18) davon und der Vertiefung (4) die elastischen Mittel (10) angeordnet sind, um den Schieber (9) in die Eingriffskonfiguration zwischen dem gekrümmten Anhang (17) und der Außenfläche des Rollenelements (8) zu drücken, wobei das Absenken des stützenden Ständers (5) den elastischen Mitteln (10) entgegenwirkt, mit daraus folgendem Beabstanden des vorstehenden Anhangs (17) von der Außenfläche des Rollenelements (8) in die Nicht-Eingriffs-Konfiguration.

4. Das Rad gemäß Anspruch 1 und alternativ gemäß Anspruch 2 und 3, **dadurch gekennzeichnet, dass** der Schieber (9) innerhalb der Vertiefung (4) kippen kann und einen Hauptkörper (19) umfasst, der in der Vertiefung (4) untergebracht ist, und einen konturierten hinausragenden Vorsprung (20), der das Widerlager (11) umfasst, wobei zwischen einer zweiten Fläche (21) des Vorsprungs (20), gegenüber dem Widerlager (11), und der Vertiefung (4) die elastischen Mittel (10) angeordnet sind, um eine Drehung des Schiebers (9) in eine Konfiguration des Eingriffs zwischen dem konturierten Vorsprung (20) und der Außenfläche des Rollenelements (8) zu erzwingen, wobei das Absenken des stützenden Ständers (5) den elastischen Mitteln (10) entgegenwirkt, mit daraus folgendem Beabstanden des Vorsprungs (20) von der Außenfläche des Rollenelements (8) in die Nicht-Eingriffs-Konfiguration.

5. Das Rad gemäß Anspruch 1 und alternativ gemäß Anspruch 2, 3 und 4, **dadurch gekennzeichnet, dass** der Träger (2) einen unteren Hohlraum (22), ausgerichtet mit der Vertiefung (4), für die Aufnahme des Schiebers (9) umfasst, wobei zwischen dem Hohlraum (22) und der Vertiefung (4) ein Kanal (23) bestimmt ist und der Schieber (9) einen oberen Schaft (24) mit einer Form und Maßen umfasst, die komplementär zu denjenigen des Kanals (23) sind, zum Einschieben dort hinein, wobei zwischen dem Fuß (25) des Schiebers (9) und dem Boden des Hohlraums (22) elastische Mittel (10) angeordnet sind, um den Schieber (9) in einer erhöhten Position mit entsprechender Interferenz eines Anhangs (26) desselben, der das Widerlager (11) umfasst, auf der Außenfläche des Rollenelements (8) zu halten, wobei das Absenken des stützenden Ständers (5) aufgrund der Anwesenheit einer Last auf dem Möbelstück sein Ende veranlasst, auf dem Kopf des Schafts (24) aufzuliegen, und Letzteren, und damit den Schieber (9), veranlasst, nach unten gedrückt zu werden, mit daraus folgendem Beabstanden des Schiebers (9) von dem Rollenelement (8) und Einnahme der Nicht-Eingriffs-Konfiguration.

6. Das Rad gemäß Anspruch 5, **dadurch gekennzeichnet, dass** der Boden des Hohlraums (22) aus einem Stöpsel (27) besteht, der lösbar mit dem Träger (2) gekoppelt werden kann, zum Verschließen des Hohlraums (22) nach dem Einführen des Schiebers (9) und der elastischen Mittel (10), im Montageschritt.

7. Das Rad gemäß Anspruch 1, **dadurch gekennzeichnet, dass** der Vorsprung (34, 35) vorzugsweise gewählt ist aus der Endspitze eines Stifts, der Endspitze eines Gewindestifts (34), der Endspitze einer Lasche, der Endspitze eines Schlüssels, der Endspitze einer Schraube, einer lokalen Ausstülpung der inneren Oberfläche der Vertiefung und einem Grat (35) der Innenfläche der Vertiefung (4).

8. Das Rad gemäß Anspruch 1, **dadurch gekennzeichnet, dass** zwischen dem Bolzen (29) und dem Schaftelement (30) eine Kugel (36) angeordnet ist, wobei die Endspitze des Bolzens (29) auf einem Abschnitt mit reduzierter Fläche der Kugel (36) aufliegt, die wiederum auf dem Boden des inneren Hohlraums (31) des Schaftelements (30) aufliegt, mit daraus folgender Minimierung der Reibung und im Wesentlichen freier Drehung des Schaftelements (30) um den Bolzen (29).

9. Das Rad gemäß einem oder mehreren der obigen Ansprüche, **dadurch gekennzeichnet, dass** zwischen der Vertiefung (4) und dem Schaftelement (30) weitere elastische Mittel (37) angeordnet sind, um das Schaftelement (30) in Abwesenheit einer Last auf dem Möbelstück, in dem es installiert ist, in einer erhöhten Position mit Bezug auf die Vertiefung (4) zu halten.

10. Das Rad gemäß einem oder mehreren der obigen Ansprüche, **dadurch gekennzeichnet, dass** zwischen der hohlen Hülse (7), die mit dem mindestens einen seitlichen Band (6) gekoppelt ist, und dem im Wesentlichen ringförmigen Rollenelement (8) mindestens ein Lager (38) angeordnet ist, vorzugsweise von der Art mit Kugeln, Rollen, Zylinderrollen und dergleichen.

11. Das Rad gemäß einem oder mehreren der obigen Ansprüche, **dadurch gekennzeichnet, dass** das Widerlager (11) des Schiebers (9) aus einem Material mit einem hohen Reibungskoeffizienten mit der Außenfläche des Rollenelements (8) besteht.

12. Das Rad gemäß einem oder mehreren der obigen Ansprüche, **dadurch gekennzeichnet, dass** die seitlichen Bänder (6) zwei an der Zahl sind, die einander zugewandt sind und nebeneinander liegen, versehen mit im Wesentlichen kreisförmigen Öffnungen (39) für die Aufnahme der Hülse (7), wobei das im Wesentlichen ringförmige Rollenelement (8) einen Außendurchmesser hat, der größer ist als die transversale Breite der Bänder (6), wobei in der Konfiguration für die Montage das Rollenelement (8) in einer radialen Richtung mit Bezug auf die Bänder (6) teilweise herausragt.

## Revendications

1. Roue (1) pour articles d'ameublement qui comprend un support (2), ledit support (2) étant prévu avec au moins une partie verticale (3) ayant au moins un réceptacle (4) pour loger un montant de support (5) solidaire avec l'article d'ameublement, et ledit support (2) ayant en outre au moins une bande latérale (6), et la roue (1) comprenant en outre un manchon creux (7), ledit manchon creux (7) étant couplé à au moins une dite bande latérale (6) et ledit manchon creux (7) supporte en rotation un élément roulant (8) sensiblement annulaire, la roue (1) comprenant en outre au moins une glissière (9), qui est au moins partiellement logée dans ledit réceptacle (4), et est alignée avec la pointe d'extrémité dudit montant de support (5), ladite au moins une glissière (9) étant apte à se déplacer à partir d'une première configuration d'interférence avec ledit élément roulant (8) par l'action de moyens élastiques (10) respectifs, avec l'appui consécutif d'une butée (11) sur la surface extérieure dudit élément roulant (8), ladite première configuration correspondant à un déploiement dans lequel ledit montant de support (5) est levé et à proximité de ladite glissière (9), à une seconde configuration de non interférence, en forçant lesdits moyens élastiques (10), avec l'espacement conséquent de ladite butée (11) de la surface extérieure dudit élément roulant (8), ladite seconde configuration correspondant à un déploiement abaissé dudit montant de support (5) s'appuyant sur ladite glissière (9), ledit montant de support (5) comprenant une broche (29), qui est solidaire dudit article d'ameublement, et un élément d'arbre (30) de forme et de dimensions extérieures complémentaires par rapport à celles dudit réceptacle (4) et de forme et de dimensions de sa cavité interne (31) complémentaires par rapport à celles de ladite broche (29), ledit élément d'arbre (30) étant coulissable dans ledit réceptacle (4) le long d'une course prédéterminée, de manière solidaire avec ladite broche (29), **caractérisée par** :
ledit élément d'arbre (30) comprenant une fente (32, 33), sensiblement parallèle à l'axe dudit élément d'arbre (30), de longueur égale à ladite course prédéterminée, ledit réceptacle (4) comprenant un saillie (34, 35), conçue pour être logée à l'intérieur de ladite fente (32, 33), pour la butée sur ses bords terminaux dans les deux configurations de limite qui sont définies par ladite course prédéterminée.

2. Roue selon la revendication 1, **caractérisée en ce que** ladite glissière (9) peut coulisser sur le fond (12) dudit réceptacle (4) dans une direction transversale par rapport à l'axe dudit montant de support (5), entre sa deuxième face (13) opposée à une première face comprenant ladite butée (11), et ledit réceptacle (4), étant intercalés lesdits moyens élastiques (10) pour forcer ladite glissière (9) dans la configuration d'interférence, une troisième face (14) au-dessus de ladite glissière (9) comprenant un plan incliné qui fait face et est à proximité de la pointe d'extrémité (15) dudit montant de support (5), la descente dudit montant de support (5) venant s'opposer auxdits moyens élastiques (10) avec l'espacement conséquent de ladite butée (11) par rapport à la surface extérieure dudit élément roulant (8) dans ladite configuration de non interférence.

3. Roue selon la revendication 1 et en variante selon la revendication 2, **caractérisée en ce que** ladite glissière (9) peut réaliser un mouvement de translation verticalement à l'intérieur dudit réceptacle (4) et comprend un corps principal (16) logé à l'intérieur dudit réceptacle (4) et un appendice incurvé en saillie (17) comprenant ladite butée (11), entre sa face d'extrémité inférieure (18) et ledit réceptacle (4) sont intercalés lesdits moyens élastiques (10) pour forcer ladite glissière (9) dans la configuration d'interférence entre ledit appendice incurvé (17) et la surface extérieure dudit élément roulant (8), la descente dudit montant de support (5) s'opposant auxdits moyens élastiques (10) avec l'espacement conséquent dudit appendice en saillie (17) de la surface extérieure dudit élément roulant (8) dans ladite configuration de non interférence.

4. Roue selon la revendication 1 et en variante les revendications 2 et 3, **caractérisée en ce que** ladite glissière (9) peut s'incliner à l'intérieur dudit réceptacle (4) et comprend un corps principal (19) logé à l'intérieur dudit réceptacle (4) et une saillie profilée en saillie (20) comprenant ladite butée (11), entre une deuxième face (21) opposée à la butée (11) de ladite saillie (20) et ledit réceptacle (4), sont intercalés lesdits moyens élastiques (10) pour forcer une rotation de ladite glissière (9) dans une configuration d'interférence entre ladite saillie profilée (20) et la surface extérieure dudit élément roulant (8), la descente dudit montant de support (5) s'opposant auxdits moyens élastiques (10) avec l'espacement conséquent de ladite saillie (20) de la surface extérieure dudit élément roulant (8) dans ladite configuration de non interférence.

5. Roue selon la revendication 1 et en variante les revendications 2, 3 et 4, **caractérisée en ce que** ledit support (2) comprend un compartiment inférieur (22), aligné avec ledit réceptacle (4), pour le logement de ladite glissière (9), entre ledit compartiment (22) et ledit réceptacle (4), est défini un canal (23), ladite glissière (9) comprenant une tige supérieure (24) de forme et de dimensions complémentaires à celles dudit canal (23) pour l'insertion coulissante dans ce dernier, entre la base (25) de ladite glissière (9) et le fond dudit compartiment (22), sont intercalés des moyens élastiques (10) afin de maintenir ladite glissière (9) dans une position levée avec l'interférence correspondante de son appendice (26), comprenant ladite butée (11) sur la surface extérieure dudit élément roulant (8), la descente dudit montant de support (5) en présence d'une charge sur l'article d'ameublement, amenant son extrémité à s'appuyer sur la tête de ladite tige (24) et amener cette dernière, et donc la glissière (9), à être forcées vers le bas, avec l'espacement conséquent de la glissière (9) dudit élément roulant (8) et l'hypothèse de ladite configuration de non interférence.

6. Roue selon la revendication 5, **caractérisée en ce que** le fond dudit compartiment (22) est constitué par un bouchon (27) qui peut être couplé de manière amovible audit support (2) pour la fermeture dudit compartiment (22) après l'insertion de ladite glissière (9) et desdits moyens élastiques (10), à l'étape d'assemblage.

7. Roue selon la revendication 1, **caractérisée en ce que** ladite saillie (34, 35) est de préférence sélectionnée parmi la pointe d'extrémité d'une broche, la pointe d'extrémité d'une vis sans tête (34), la pointe d'extrémité d'une languette, la pointe d'extrémité d'une clé, la pointe d'extrémité d'une vis, une protubérance localisée de la surface interne dudit réceptacle, et une crête (35) de la surface interne dudit réceptacle (4).

8. Roue selon la revendication 1, **caractérisée en ce que**, entre ladite broche (29) et ledit élément d'arbre (30), est intercalée une bille (36), ladite broche (29) ayant sa pointe d'extrémité qui s'appuie sur une partie de surface réduite de ladite bille (36) qui s'appuie à son tour sur le fond de ladite cavité interne (31) dudit élément d'arbre (30), avec la minimisation conséquente de friction et la rotation sensiblement libre dudit élément d'arbre (30) autour de ladite broche (29).

9. Roue selon une ou plusieurs des revendications précédentes, **caractérisée en ce que**, entre ledit réceptacle (4) et ledit élément d'arbre (30) sont intercalés en outre des moyens élastiques (37) afin de maintenir ledit élément d'arbre (30) dans une position levée par rapport audit réceptacle (4) en l'absence d'une charge sur l'article d'ameublement dans lequel ils sont installés.

10. Roue selon une ou plusieurs des revendications précédentes, **caractérisée en ce que**, entre ledit manchon creux (7) couplé à la au moins une dite bande latérale (6), et ledit élément roulant (8) sensiblement annulaire, est intercalé au moins un palier (38), de préférence du type à billes, à rouleaux, à rouleaux cylindriques et similaires.

11. Roue selon une ou plusieurs des revendications précédentes, **caractérisée en ce que** ladite butée (11) de ladite glissière (9) est réalisée avec un matériau ayant un coefficient de friction élevé avec la surface extérieure dudit élément roulant (8).

12. Roue selon une ou plusieurs des revendications précédentes, **caractérisée en ce que** lesdites bandes latérales (6) sont au nombre de deux, se faisant mutuellement face et mutuellement à proximité, prévues avec des sièges (39) sensiblement circulaires pour loger ledit manchon (7), ledit élément roulant (8) sensiblement annulaire ayant un diamètre extérieure supérieur à la largeur transversale desdites bandes (6), dans la configuration d'assemblage, ledit élément roulant (8) faisant partiellement saillie dans une direction radiale par rapport auxdites bandes (6).
